# FASCICULE DE BREVET EUROPEEN

(11) **EP 0 662 674 B1**
(45) Date de publication et mention de la délivrance du brevet: **04.05.2005**
(21) Numéro de dépôt: 95400037.8
(22) Date de dépôt: 09.01.1995
(51) Int. Cl.: G07F 7/10, G06F 13/38

(54) **Ensemble terminal-carte, carte et terminal**
System mit Endgerät und Karte, Karte und Endgerät
Terminal-card system, card and terminal

(30) Priorité: 10.01.1994 FR 9400164
(43) Date de publication de la demande: 12.07.1995
(73) Titulaire: FRANCE TELECOM, 75015 Paris (FR); LA POSTE, 92777 Boulogne Billancourt Cédex (FR)
(72) Inventeur: Remery, Patrick, F-14000 Caen (FR); Darvour, Bernard, F-14000 Caen (FR); Vallee, Françoise, F-14480 Lantheuil (FR)
(74) Mandataire: Dronne, Guy

(56) Documents cités:
- WO-A-88/01818
- WO-A-91/17528
- US-A- 5 036 461

## Description

### Domaine technique

La présente invention a pour objet un système pour transactions comprenant des terminaux et des cartes à mémoire. Elle trouve de multiples applications dans le contrôle d'accès, les transactions monétaires, le paiement par porte-monnaie électronique, etc.

### Etat de la technique antérieure

Les systèmes à terminaux et à cartes à mémoire sont aujourd'hui largement répandus. Dans de tels systèmes, c'est le terminal qui gère la transaction, la carte n'étant qu'un moyen sécurisé intervenant, à la demande du terminal, pour remplir certaines fonctions. Il peut s'agir de l'identification du porteur (contrôle d'un code confidentiel), du calcul de certificats permettant d'authentifier le compte du porteur et d'autoriser des échanges de données, etc... En d'autres termes, dans l'ensemble terminal-carte, c'est le terminal qui est le maître et c'est la carte qui est l'esclave.

Le programme applicatif, qui détermine la transaction à exécuter, est placé dans le terminal. Il est écrit en général dans une mémoire morte (ou "ROM" pour "Read-Only-Memory") et ne peut être modifié. Eventuellement, il pourrait être décrit dans une mémoire vive ou à accès direct ("RAM" pour "Random-Access-Memory"). Dans ce cas, il pourrait être modifié. Mais cela supposerait que le terminal soit relié à un réseau de télécommunications approprié apte à effectuer un téléchargement au moment de la nouvelle transaction à exécuter.

Dans la plupart des systèmes actuels, les systèmes de transactions à terminaux et à cartes à mémoire sont dédiés à une application particulière, sans qu'il soit possible de modifier aisément cette application ou d'en ajouter d'autres. Par ailleurs, il est difficile et coûteux d'adapter les terminaux existants aux progrès permanents et rapides obtenus sur les cartes à mémoire.

La présente invention a justement pour but de remédier à ces inconvénients.

Le document WO-A-88 01818 décrit un système de transaction comprenant un terminal et la carte à microprocesseur d'un utilisateur. La carte comprend une mémoire EPROM, mémoire non volatile et non réinscriptible, dans laquelle une zone jeton est définie. Le document décrit les fonctions de chaque élément du système et leur interaction. En fait, il décrit un mode de paiement "off-line" basé sur l'écriture de jetons dans une carte à mémoire prépayée. L'échange de mots cryptés entre la carte de l'utilisateur et le module sécurisé à microprocesseur situé dans le terminal, autorise la délivrance d'une prestation comme l'impression d'un timbre postal.

Il est précisé que c'est le terminal qui contrôle l'interface avec la carte et les opérations des différentes parties du terminal incluant le clavier, l'afficheur, l'imprimante de la machine à affranchir

Le document US-A-5 036 461 décrit un terminal dans lequel le code du programme applicatif qui sera exécuté par le terminal est enregistré dans une carte à mémoire émise par une institution financière. Lorsque la carte est insérée dans le terminal, le programme de contrôle du terminal, à l'aide d'une procédure sécurisée, lit le code écrit dans la mémoire de la carte. Le code lu est ensuite exécuté par le terminal. Cependant, la lecture sécurisée peut être coûteuse en temps d'exécution, en particulier s'il s'agit d'une application de contrôle d'accès aux transports publics, autoroutes, etc...

Le document WO-A-9 117 528 décrit un ensemble dispositif-carte pour exécuter une transaction particulière entre deux cartes, une des cartes contenant toutes les données d'identification, de commande et de gestion du dispositif et de la transaction.

### Exposé de l'invention

A cette fin, l'invention propose un ensemble terminal-carte selon la revendication 1. On a donc renversé la hiérarchie des moyens. Il est alors beaucoup plus facile d'adapter, modifier ou d'ajouter des transactions en modifiant les cartes, les terminaux restant ce qu'ils sont.

L'invention objet de la présente demande élimine bien les inconvénients de l'art antérieur car le programme applicatif est exécuté par la carte à microprocesseur elle-même. Il n'est donc plus nécessaire de transférer vers le terminal le code applicatif. Dans la présente invention, le terminal met à disposition de la carte des fonctions élémentaires universelles (saisie clavier, affichage écran, transmission de données, etc...) qui sont appelées par la carte pendant l'exécution de son programme.

La présente invention a également pour objet une carte selon la revendication 8 et un terminal selon la revendication 15.

### Brève description des figures

- les figures 1a, 1b, 1c, 1d illustrent un premier exemple de transaction, qui est un paiement par carte porte-monnaie électronique,
- la figure 2 illustre un second exemple de transaction, qui est la lecture du solde d'une carte porte-monnaie électronique.

### Description détaillée de modes de réalisation

Dans un mode de réalisation particulier, un terminal selon l'invention peut comprendre divers modules pris dans la liste suivante, qui n'est pas exhaustive :
- un module d'affichage, d'adresse TA ; plusieurs fonctions peuvent être remplies par un tel module, comme par exemple le format de caractère (gras, italique, souligné, etc...), le positionnement (à gauche, centré, à droite, à partir d'une adresse, sur la nième ligne, etc...) ; ce module pourra recevoir, par l'adresse correspondante, la commande "écriture" ;
- un module de saisie, qui peut être en particulier un clavier, d'adresse TC ; ce module pourra recevoir la commande "lecture" ; la saisie n'est pas nécessairement manuelle, mais peut être automatique dans une base de données ;
- un module de liaison vers l'extérieur, d'adresse TL ; il pourra recevoir la commande "lecture" (en réception) ou la commande "écriture" (en émission) ;
- un module mémoire, d'adresse TM ; ce module pourra recevoir la commande "lecture" ou "écriture" ; plusieurs sous-fonctions peuvent être définies (écriture à une adresse logique, effacement des zones mémoires, etc...) ;
- un module liaison vers une carte à mémoire dont l'adresse est notée TCAM ; ce module pourra recevoir toutes les commandes destinées à une carte à mémoire ou venant d'une autre carte à mémoire maître, et des acquittements venant d'autres modules.

Tous ces modules sont esclaves, c'est-à-dire qu'ils sont placés sous la commande de la carte ou d'une des cartes introduite(s) dans le terminal.

Les cartes possèdent, de leur côté, le logiciel applicatif et le protocole de communication leur permettant de communiquer avec n'importe quel terminal. Ce logiciel est écrit dans une mémoire à lecture seule (ROM) ou à lecture et écriture (EPROM, E²PROM).

La transaction est alors effectuée sous le contrôle de la carte et non sous celui du terminal. La carte transmet au terminal et à ses différents modules toutes les commandes nécessaires à l'exécution de la transaction. Un acquittement (c'est-à-dire une réponse) est retourné à la carte, laquelle l'analyse et décide de l'action suivante à entreprendre.

La carte à mémoire devient donc l'organe maître de la transaction. Le terminal et ses modules ne sont que des esclaves. S'il y a plusieurs cartes à mémoire introduites ou reliées à un même terminal, au début de la transaction, les cartes sont toutes provisoirement maîtres. Elles vont agir pour connaître leur mode de fonctionnement (maître ou esclave) par lecture du clavier du terminal. En fonction de la réponse donnée par le clavier, qui définit le type de transaction choisi, une seule de ces cartes restera maître, les autres devenant esclaves.

Par exemple, s'il s'agit d'une transaction du type paiement par porte-monnaie électronique (en abrégé PME), c'est une carte dite module de sécurité ou SAM ("Security Application Module"), qui va diriger la transaction. Les deux cartes PME et SAM, au début de la transaction, vont lire sur le clavier le type de transaction sélectionné par le commerçant disposant du terminal. La carte SAM va se placer en mode maître et la carte PME en mode esclave. La carte PME se mettra en position d'attente des ordres provenant de la carte SAM.

Au cours d'une transaction, une carte maître peut éventuellement passer en mode esclave et vice versa.

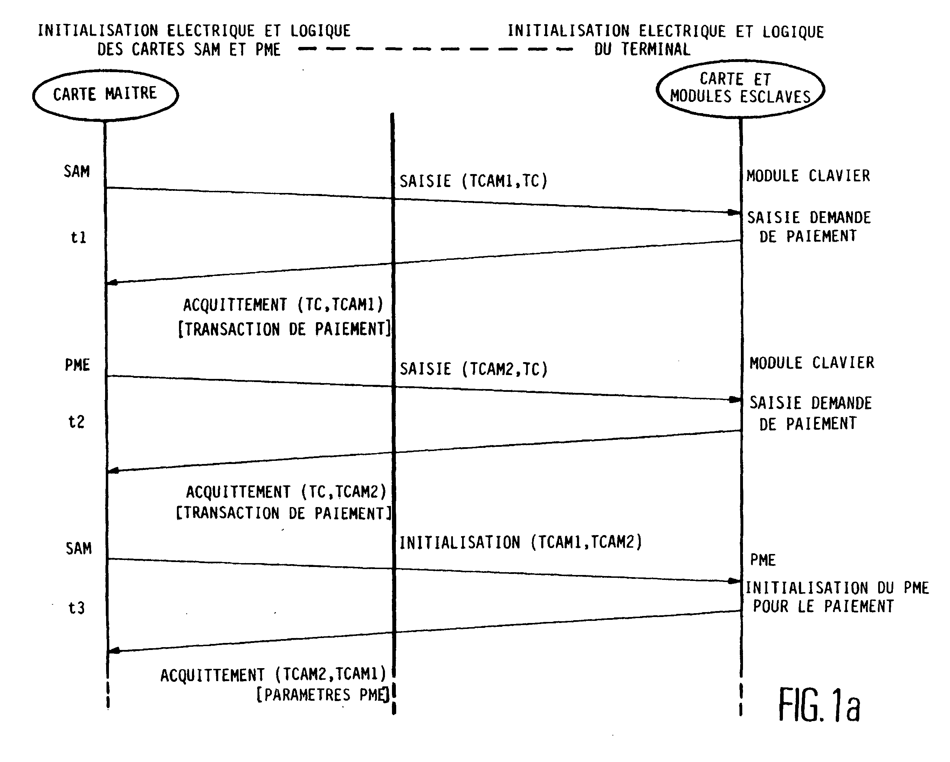

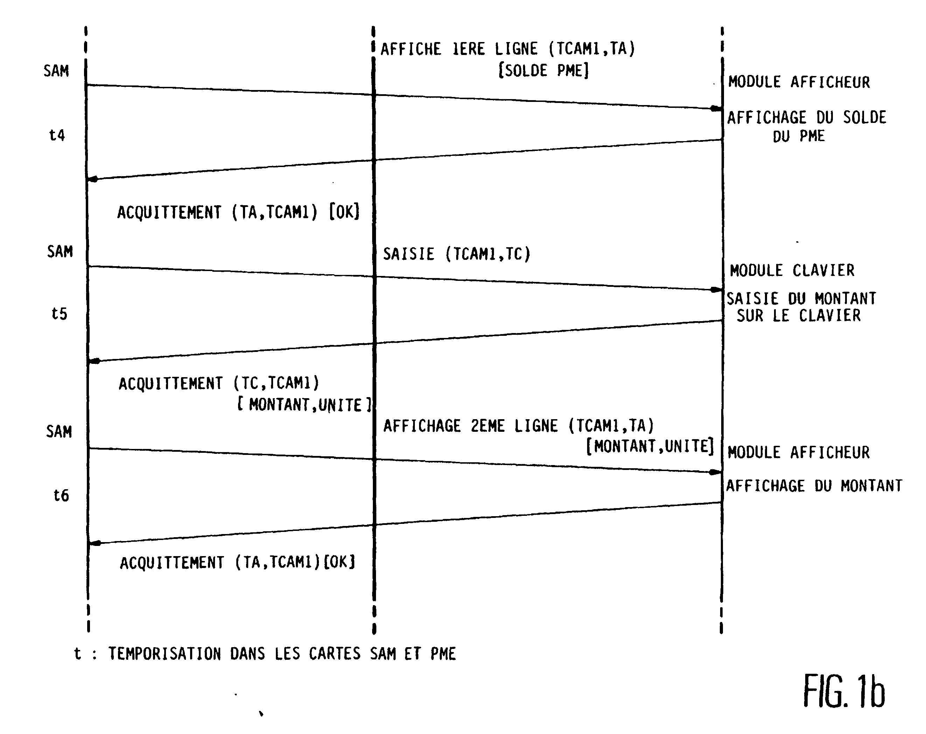

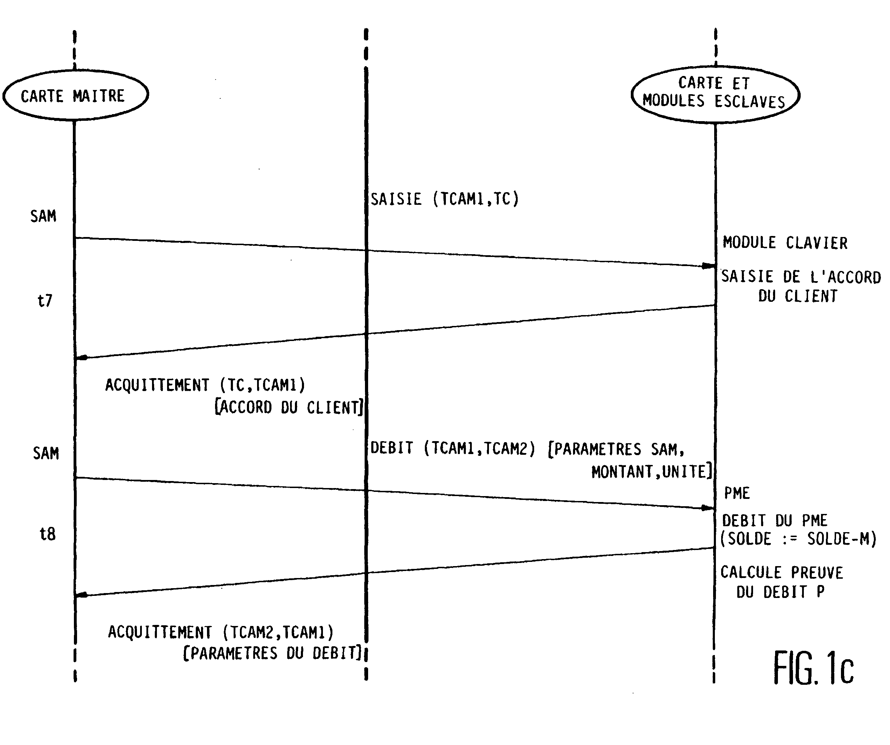

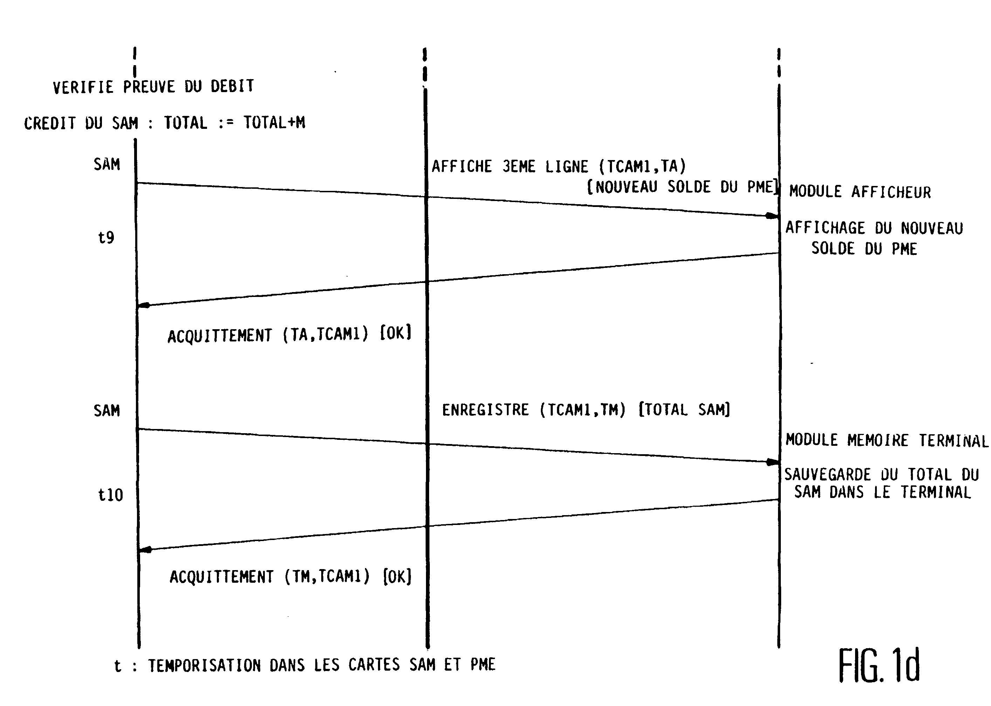

Les figures annexées illustrent deux modes de mise en oeuvre d'un système conforme à l'invention. Dans le cas des figures 1a, 1b, 1c, 1d, il s'agit d'une transaction de paiement par carte porte-monnaie électronique (PME) gérée par une carte SAM, qui est l'organe sécuritaire du commerçant. Celui-ci se crédite à chaque paiement du montant débité dans la carte PME.

La convention d'écriture pour les commandes et les acquittements mentionnés sur ces figures, est la suivante : la fonction remplie est d'abord indiquée (par exemple, "saisie", "initialisation", etc...) ; puis, entre parenthèses, on trouve l'adresse de la source puis celle du récepteur ; par exemple "(TCAM1, TC)" signifie que l'adresse de la source est "TCAM1", (c'est-à-dire que la source est une liaison vers une première carte à mémoire) et que l'adresse du récepteur est "TC", (le récepteur étant donc un clavier). Enfin, entre crochets et le cas échéant, on trouve les données liées à la commande ou à l'acquittement (par exemple "montant", "unité").

Dans le cas des figures 1a, 1b, 1c, 1d la transaction comprend les opérations suivantes :
- initialisation du terminal et des cartes "SAM" et "PME",
- saisie demande de transaction de paiement, pour la carte "SAM",
- saisie demande de transaction de paiement, pour la carte "PME",
- initialisation du "PME",
- affichage du solde du "PME",
- saisie du montant,
- affichage du montant,
- saisie de l'acceptation du client,
- débit du "PME",
- authentification du débit du PME et crédit du "SAM",
- affichage du nouveau solde du "PME",
- sauvegarde du total du "SAM" dans le terminal.

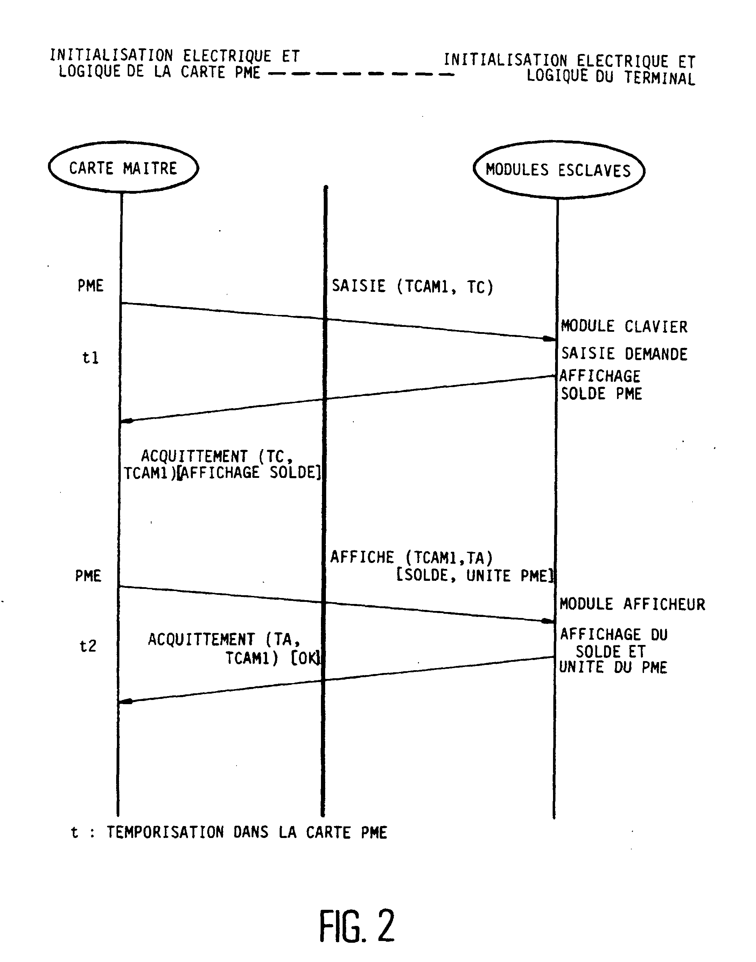

Dans le cas de la figure 2, la transaction dont il s'agit est la lecture du solde d'une carte PME.

La transaction comprend les étapes suivantes :
- initialisation du terminal et de la carte "PME",
- saisie de la demande de lecture du solde,
- commande affichage du solde.

On utilise donc les modules du terminal identifiés par les adresses "TA, TC, TCAM1" (la carte "PME").

## Revendications

1. Ensemble terminal-carte comprenant des moyens dits "maîtres" aptes à commander une transaction particulière et des moyens dits "esclaves" intervenant à la demande des moyens maîtres pour exécuter cette transaction, les moyens maîtres étant disposés dans la carte et les moyens esclaves dans le terminal, la transaction étant effectuée sous le contrôle de la carte, laquelle transmet au terminal toutes les commandes nécessaires à l'exécution de la transaction, leterminal retoumant un acquittement à la carte en réponse à chacune desdites commandes, laquelle analyse cet acquittement et décide de l'action suivante à entreprendre, un acquittement comprenant comme informations la source, la destination et la fonction remplie.

2. Ensemble selon la revendication 1, **caractérisé par le fait que** lesdits moyens esclaves comprennent divers modules passifs dont un écran d'affichage, des moyens de saisie d'information, des moyens de liaisons intérieures et extérieures et au moins un lecteur de carte à mémoire.

3. Ensemble terminal-carte selon l'une quelconque des revendications 1 et 2, caractérisé et en ce qu'au moins une desdites commandes est émise par la carte en réponse à la réception d'un acquittement.

4. Ensemble terminal-carte selon l'une quelconque des revendications 1 à 3, **caractérisé en ce qu'**une commande comprend comme information la source, la destination et la fonction remplie.

5. Ensemble terminal-carte selon l'une quelconque des revendications 1 à 4, **caractérisé en ce que** leterminal est apte à être relié à une seule carte.

6. Ensemble terminal-carte selon l'une quelconque des revendications 1 à 5, **caractérisé en ce que** la carte est amovible.

7. Ensemble terminal-carte selon l'une quelconque des revendications 2 à 6, **caractérisé en ce que** l'acquittement est retourné par les modules du terminal.

8. Carte destinée à coopérer avec un terminal, la carte comportant des moyens maîtres de façon à ce qu'une transaction soit effectuée sous le contrôle de la carte par des moyens esclaves du terminal, lesdits moyens maîtres étant aptes à transmettre au terminal toutes les commandes nécessaires à l'exécution de la transaction, à recevoir du terminal un acquittement en réponse à chacune desdites commandes, à analyser l'acquittement et décider de l'action suivante à entreprendre, un acquittement comprenant comme informations la source, la destination et la fonction remplie.

9. Carte selon la revendication 8, **caractérisée en ce que** les moyens maîtres sont destinés à commander des moyens esclaves constitués par des modules du terminal, les modules étant des modules passifs compris dans le groupe incluant un écran d'affichage, des moyens de saisie d'informations, des moyens de liaisons intérieures et extérieures et au moins un lecteur de carte à mémoire.

10. Carte selon la revendication 8 ou 9, **caractérisée en ce que** les moyens maîtres comprennent un programme applicatif exécuté par la carte elle-même.

11. Carte selon l'une quelconque des revendications 8 à 10, **caractérisée en ce qu'**au moins une desdites commandes est émise par la carte en réponse à la réception d'un acquittement.

12. Carte selon l'une quelconque des revendications 8 à 11, **caractérisée en ce qu'**une commande comprend comme information la source, la destination et la fonction remplie.

13. Carte selon l'une quelconque des revendications 8 à 12, **caractérisée en ce qu'**elle est amovible.

14. Carte selon l'une quelconque des revendications 9 à 13, **caractérisée en ce que** l'acquittement est retourné par les modules du terminal.

15. Terminal destiné à effectuer une transaction particulière en coopération avec une carte, le terminal comportant des moyens esclaves commandables par des moyens maîtres disposés dans la carte, les moyens esclaves étant aptes à recevoir de la carte les commandes nécessaires à l'exécution de la transaction, le terminal étant apte à retourner un acquittement à la carte en réponse à chacune desdites commandes, un acquittement comprenant comme informations la source, la destination et la fonction remplie.

16. Terminal selon la revendication 15, **caractérisé par le fait que** les moyens esclaves comprennent des modules passifs compris dans le groupe incluant un écran d'affichage, des moyens de saisie d'informations, des moyens de liaisons intérieures et extérieures et au moins un lecteur de carte à mémoire.

17. Terminal selon l'une quelconque des revendications 15 ou 16, **caractérisé en ce qu'**au moins une desdites commandes est émise par la carte en réponse à la réception d'un acquittement.

18. Terminal selon l'une quelconque des revendications 15 à 17, **caractérisé en ce que** ledit terminal est apte à être relié à une seule carte.

19. Terminal selon l'une quelconque des revendications 15 à 18, **caractérisé en ce que** ladite carte est amovible.

20. Terminal selon l'une quelconque des revendications 16 à 19, **caractérisé en ce que** l'acquittement est retourné par les modules du terminal.

## Patentansprüche

1. System mit Endgerät und Karte, das so genannte "Master"-Mittel, die geeignet sind, eine spezielle Transaktion zu steuern, und so genannte "Slave"-Mittel umfaßt, die auf Aufforderung der Master-Mittel eingreifen, um die Transaktion durchzuführen, wobei die Master-Mittel in der Karte und die Slave-Mittel im Endgerät angeordnet sind, wobei die Transaktion unter der Kontrolle der Karte durchgeführt wird, welche an das Endgerät alle Befehle weiterleitet, die für die Ausführung der Transaktion erforderlich sind, wobei das Endgerät eine Bestätigung an die Karte als Reaktion auf jeden der Befehle zurückschickt, wobei die Karte die Bestätigung analysiert und über die folgende auszuführende Handlung entscheidet, wobei eine Bestätigung als Informationen die Quelle, das Ziel und die erfüllte Funktion enthält.

2. System nach Anspruch 1, **dadurch gekennzeichnet, daß** die Slave-Mittel verschiedene passive Module umfassen, darunter einen Anzeigebildschirm, Mittel zum Eingeben von Informationen, innere und äußere Verbindungsmittel und mindestens einen Speicherkartenleser.

3. System mit Endgerät und Karte nach einem der Ansprüche 1 und 2, **dadurch gekennzeichnet, daß** mindestens einer der Befehle durch die Karte als Reaktion auf das Empfangen einer Bestätigung ausgegeben wird.

4. System mit Endgerät und Karte nach einem der Ansprüche 1 bis 3, **dadurch gekennzeichnet, daß** ein Befehl als Information die Quelle, das Ziel und die erfüllte Funktion umfaßt.

5. System mit Endgerät und Karte nach einem der Ansprüche 1 bis 4, **dadurch gekennzeichnet, daß** das Endgerät geeignet ist, mit einer einzigen Karte verbunden zu werden.

6. System mit Endgerät und Karte nach einem der Ansprüche 1 bis 5, **dadurch gekennzeichnet, daß** die Karte entfembar ist.

7. System mit Endgerät und Karte nach einem der Ansprüche 2 bis 6, **dadurch gekennzeichnet, daß** die Bestätigung durch die Module des Endgerätes zurückgeschickt wird.

8. Karte, die dazu bestimmt ist, mit dem Endgerät zusammen zu arbeiten, wobei die Karte Master-Mittel umfaßt, so daß eine Transaktion unter der Kontrolle der Karte durch Slave-Mittel des Endgerätes ausgeführt wird, wobei die Master-Mittel geeignet sind, an das Endgerät alle Befehle zu übertragen, die für die Ausführung der Transaktion erforderlich sind, vom Endgerät eine Bestätigung als Reaktion auf jeden der Befehle zu erhalten, die Bestätigung zu analysieren und über die folgende auszuführende Handlung zu entscheiden, wobei eine Bestätigung als Informationen die Quelle, das Ziel und die erfüllte Funktion umfaßt.

9. Karte nach Anspruch 8, **dadurch gekennzeichnet, daß** die Master-Mittel dazu bestimmt sind, Slave-Mittel zu steuern, die aus Modulen des Endgerätes bestehen, wobei die Module passive Module sind, die in der Gruppe enthalten sind, welche einen Anzeigebildschirm, Mittel zum Eingeben von Informationen, interne und externe Verbindungsmittel und mindestens einen Speicherkartenleser einschließt.

10. Karte nach Anspruch 8 oder 9, **dadurch gekennzeichnet, daß** die Master-Mittel ein Anwendungsprogramm umfassen, das von der Karte selbst ausgeführt wird.

11. Karte nach einem der Ansprüche 8 bis 10, **dadurch gekennzeichnet, daß** mindestens einer der Befehle durch die Karte als Reaktion auf den Empfang einer Bestätigung ausgegeben wird.

12. Karte nach einem der Ansprüche 8 bis 11, **dadurch gekennzeichnet, daß** ein Befehl als Information die Quelle, das Ziel und die erfüllte Funktion umfaßt.

13. Karte nach einem der Ansprüche 8 bis 12, **dadurch gekennzeichnet, daß** die Karte entfernbar ist.

14. Karte nach einem der Ansprüche 9 bis 13, **dadurch gekennzeichnet, daß** die Bestätigung durch die Module des Endgerätes zurückgeschickt wird.

15. Endgerät, das dazu bestimmt ist, eine spezielle Transaktion in Zusammenarbeit mit einer Karte auszuführen, wobei das Endgerät Slave-Mittel umfaßt, die durch die in der Karte angeordneten Master-Mittel steuerbar sind, wobei die Slave-Mittel geeignet sind, von der Karte die Befehle zu empfangen, die für die Ausführung der Transaktion erforderlich sind, wobei das Endgerät geeignet ist, als Reaktion auf jeden der Befehle eine Bestätigung an die Karte zurückzuschicken, wobei eine Bestätigung als Informationen die Quelle, das Ziel und die erfüllte Funktion umfaßt.

16. Endgerät nach Anspruch 15, **dadurch gekennzeichnet, daß** die Slave-Mittel passive Module umfassen, welche in der Gruppe enthalten sind, die einen Anzeigebildschirm, Mittel zum Eingeben von Informationen, innere und äußere Verbindungsmittel und mindestens einen Speicherkartenleser einschließt.

17. Endgerät nach einem der Ansprüche 15 oder 16, **dadurch gekennzeichnet, daß** mindestens einer der Befehle durch die Karte als Reaktion auf den Empfang einer Bestätigung ausgegeben wird.

18. Endgerät nach einem der Ansprüche 15 bis 17, **dadurch gekennzeichnet, daß** das Endgerät geeignet ist, mit einer einzigen Karte verbunden zu werden.

19. Endgerät nach einem der Ansprüche 15 bis 18, **dadurch gekennzeichnet, daß** die Karte entfernbar ist.

20. Endgerät nach einem der Ansprüche 16 bis 19, **dadurch gekennzeichnet, daß** die Bestätigung durch die Module des Endgerätes zurückgeschickt wird.

## Claims

1. Terminal/card assembly comprising what are known as "master" means capable of controlling a particular transaction and what are known as "slave" means acting at the request of the master means to execute this transaction, the master means being arranged in the card and the slave means in the terminal, the transaction being carried out under the control of the card, which transmits to the terminal all the commands necessary for the execution of the transaction, the terminal returning an acknowledgement to the card in response to each of said commands, which analyses this acknowledgement and decides on the next action to be taken, an acknowledgement comprising as information the source, the destination and the function performed.

2. Assembly according to Claim 1, **characterised by** the fact that said slave means comprise various passive modules, including a display screen, information capture means, internal and external connection means, and at least one smart card reader.

3. Terminal/card assembly according to any one of Claims 1 and 2, **characterised in that** at least one of said commands is sent by the card in response to the receipt of an acknowledgement.

4. Terminal/card assembly according to any one of Claims 1 to 3, **characterised in that** a command comprises as information the source, the destination and the function performed.

5. Terminal/card assembly according to any one of Claims 1 to 4, **characterised in that** the terminal is capable of being connected to just one card.

6. Terminal/card assembly according to any one of Claims 1 to 5, **characterised in that** the card is removable.

7. Terminal/card assembly according to any one of Claims 2 to 6, **characterised in that** the acknowledgement is returned by the modules of the terminal.

8. Card intended to co-operate with a terminal, the card comprising master means so that a transaction is carried out under the control of the card by slave means of the terminal, said master means being capable of transmitting to the terminal all the commands necessary for the execution of the transaction, of receiving from the terminal an acknowledgement in response to each of said commands, of analysing the acknowledgement and of deciding on the next action to be taken, an acknowledgement comprising as information the source, the destination and the function performed.

9. Card according to Claim 8, **characterised in that** the master means are intended to control slave means constituted by modules of the terminal, the modules being passive modules comprised in the group including a display screen, information capture means, internal and external connection means and at least one smart card reader.

10. Card according to Claim 8 or 9, **characterised in that** the master means comprise an application program executed by the card itself.

11. Card according to any one of Claims 8 to 10, **characterised in that** at least one of said commands is sent by the card in response to the receipt of an acknowledgement.

12. Card according to any one of Claims 8 to 11, **characterised in that** a command comprises as information the source, the destination and the function performed.

13. Card according to any one of Claims 8 to 12, **characterised in that** it is removable.

14. Card according to any one of Claims 9 to 13, **characterised in that** the acknowledgement is returned by the modules of the terminal.

15. Terminal intended to carry out a particular transaction in co-operation with a card, the terminal comprising slave means controllable by master means arranged in the card, the slave means being capable of receiving, from the card, the commands necessary for the execution of the transaction, the terminal being capable of returning an acknowledgement to the card in response to each of said commands, an acknowledgement comprising as information the source, the destination and the function performed.

16. Terminal according to Claim 15, **characterised by** the fact that the slave means comprise passive modules comprised in the group including a display screen, information capture means, internal and external connection means and at least one smart card reader.

17. Terminal according to any one of Claims 15 or 16, **characterised in that** at least one of said commands is sent by the card in response to the receipt of an acknowledgement.

18. Terminal according to any one of Claims 15 to 17, **characterised in that** said terminal is capable of being connected to just one card.

19. Terminal according to any one of Claims 15 to 18, **characterised in that** said card is removable.

20. Terminal according to any one of Claims 16 to 19, **characterised in that** the acknowledgement is returned by the modules of the terminal.
